# FASCICULE DE BREVET EUROPEEN

(11) **EP 1 331 796 B1**
(45) Date de publication et mention de la délivrance du brevet: **31.08.2005**
(21) Numéro de dépôt: 03290100.1
(22) Date de dépôt: 14.01.2003
(51) Int. Cl.: H04M 1/02

(54) **Boîtier de téléphone mobile à habillage amovible**
Mobiltelefongehäuse mit abnehmbaren Gehäuseschalen
Mobile telephone housing with removable casing

(30) Priorité: 25.01.2002 FR 0201001
(43) Date de publication de la demande: 30.07.2003
(73) Titulaire: Sagem SA, 75015 Paris (FR)
(72) Inventeur: Julien, Alain, 95240 Cormeilles-en-Parisis (FR); Kerbrat, Patrick, 95490 Vaureal (FR); Rotsaert, Christopher, 95240 Cormeilles-en-Parisis (FR); Lavenu, Yoann, 78955 Carrières-sous-Poissy (FR)
(74) Mandataire: Maillet, Alain

(56) Documents cités:
- EP-A- 1 028 574
- EP-A- 1 158 752
- EP-A- 1 168 774
- DE-U- 20 113 206

## Description

La présente invention concerne un boîtier de téléphone mobile à habillage amovible.

Ainsi qu'il est bien connu, un téléphone mobile est constitué par un dispositif électronique de radiotéléphonie renfermé dans un boîtier de petite taille et de forme allongée, globalement parallélépipédique, adapté à tenir dans la main d'un utilisateur. Le boîtier de téléphone mobile comprend, en plus du logement du dispositif électronique de radiotéléphonie et d'un logement de batterie, au moins les moyens nécessaires à l'installation, d'un clavier, d'un écran, d'un micro, d'un haut-parleur et d'un connecteur d'alimentation, voire d'une antenne. Le boîtier, outre sa fonction première consistant à contenir les composants du radiotéléphone, a également, vu de l'extérieur, une fonction d'habillage du radiotéléphone.

Un utilisateur de téléphone mobile recherche de plus en plus fréquemment un téléphone dont l'habillage peut être changé, par exemple lorsque cet habillage a été cassé ou rayé ou même lorsque l'utilisateur désire changer l'apparence extérieur de son téléphone. En outre, il est avantageux qu'un tel changement puisse être réalisé de manière simple, sans nécessiter de connaissance particulière ou d'outil spécial. Les téléphones mobiles à façades amovibles sont assez courants. Cependant, de tels téléphones ne permettent que de changer la partie frontale du boîtier. Si une autre partie est abîmée, ou si l'utilisateur désire changer l'apparence globale de son téléphone, un boîtier à façade mobile n'est pas suffisant.

Un téléphone mobile à habillage amovible pose un certain nombre de problèmes. Typiquement, un boîtier de téléphone mobile est constitué d'une coque arrière et d'une coque frontale ajustées l'une contre l'autre. Ces deux coques maintiennent enserrés entre elles les composants internes du téléphone. Si l'une ou l'autre coque est enlevée, certains de ces composants peuvent être déplacés. En outre, le risque qu'un de ces composants soit endommagé est accru. Enfin, la batterie du téléphone mobile étant généralement disposée sur la coque arrière du téléphone, il est nécessaire de prévoir autant de types de batterie qu'il y a de types de coque arrière.

On connaît déjà un téléphone mobile comprenant une platine intérieure pourvue de moyens de fixation des composants du téléphone mobile, batterie comprise, et deux coques adaptées à recevoir entre elles ladite platine intérieure. Des premiers moyens de fixation amovible permettent la fixation amovible d'une des coques à la platine intérieure et des seconds moyens de fixations amovible permettent la fixation amovible de l'autre coque à la platine intérieure.

Un tel dispositif est bien adapté à un changement simple de l'apparence d'un téléphone mobile. Typiquement, il convient au changement de la couleur de l'habillage. Cependant, il ne permet pas un changement important de l'habillage d'un téléphone comme, par exemple, un changement de la forme de l'habillage. En effet, les coques amovibles ont des formes qui doivent être proches de celle de la platine intérieure.

Il existe également des boîtiers à coques amovibles dans lesquels les deux coques sont assemblées directement l'une sur l'autre par des moyens indépendants, non liés à la platine intérieure, ce dernier étant maintenu par des moyens ménagés à l'intérieur d'au moins une des coques. Cependant, le mode de verrouillage des coques entre elles n'est pas satisfaisant en termes de solidité et/ou de facilité d'utilisation pour un utilisateur non averti. Par exemple, la coque arrière est adaptée à recevoir et à maintenir une platine intérieure et des moyens d'accrochage permettent d'accrocher l'extrémité inférieure de la coque avant à l'extrémité inférieure de la coque arrière, les deux coques se trouvant alors en liaison pivot l'une par rapport à l'autre. Des moyens de verrouillage permettent d'immobiliser l'une par rapport à l'autre les deux coques au niveau de leurs extrémités avant lorsque la coque avant est rabattue sur la coque arrière.

Un exemple d'un boîtier de ce type est décrit dans le document DE-U-201 13 206. Selon ce document, un téléphone mobile comprend une platine prévue pour supporter des composants électroniques, une coque de recouvrement avant ayant des parois latérales au milieu desquelles se trouvent des pattes et une coque de recouvrement arrière ayant des parois latérales pourvues de crochets au travers desquels sont introduites les pattes de la coque de recouvrement avant. Un pièce élastique comportant un rebord de blocage est prévu sur la coque de recouvrement arrière pour permettre, en association avec une partie proéminente prévue sur l'ensemble formé par la platine et ses composants, le blocage de la coque de recouvrement arrière. Cette pièce élastique est prévue pour pourvoir être repoussée de manière à libérer la coque de recouvrement arrière de façon à pouvoir l'ôter. Un tel assemblage présente l'inconvénient de permettre une ouverture accidentelle du téléphone due à la souplesse de la pièce de blocage.

On connaît un boîtier dont les moyens de verrouillage comprennent un moyen élastique à fixation par encliquetage. Un premier moyen de verrouillage est déformable globalement par pivotement par rapport à l'extrémité supérieure de la coque arrière. Lorsque la coque avant est rabattue sur la coque arrière, le premier moyen de verrouillage pivote pour laisser passer un second moyen de verrouillage ménagé sur l'extrémité supérieure de la coque avant puis, en se rabattant élastiquement, vient en prise avec le second moyen de verrouillage.

De tels moyens de verrouillage réclament une installation préalable délicate des deux coques l'une sur l'autre. Les moyens d'accrochage intervenant à l'extrémité inférieure du boîtier, fortement sollicités, risquent de se détériorer après un certain nombre d'utilisation. Le décrochage s'effectuant par une pression sur une partie du moyen de verrouillage pivotant apparaissant sur l'extrémité supérieure du boîtier, il peut être déclenché accidentellement.

La présente invention a donc notamment pour objet un boîtier de téléphone mobile à habillage amovible solide, facile à utiliser même pour un utilisateur non averti et qui permette un changement d'habillage important.

A cet effet, est proposé un boîtier de téléphone mobile à habillage amovible comprenant une platine intérieure pourvue de moyens de fixation des composants du téléphone mobile et deux coques adaptées à recevoir entre elles ladite platine intérieure, des moyens d'assemblage permettant d'assembler de manière démontable lesdites deux coques, caractérisé en ce que lesdits moyens d'assemblage comprennent un moyen de verrouillage qui est monté mobile en translation sur l'une desdites coques entre une position d'ouverture et une position de fermeture et qui est pourvu d'un moyen de fixation ayant un profil en U pour, d'une part, venir chevaucher deux pattes respectivement prévues sur l'une et l'autre desdites coques et les serrer l'une contre l'autre lorsque ledit moyen de verrouillage est dans sa position de fermeture et pour, d'autre part, les laisser libres l'une par rapport à l'autre lorsque ledit moyen de verrouillage est dans sa position d'ouverture.

Selon un autre aspect de la présente invention, des moyens de guidage ménagés sur au moins l'une des coques permettent un guidage en translation dudit moyen de verrouillage entre sa position d'ouverture et sa position de fermeture.

Avantageusement, un moyen de guidage est constitué par une desdites pattes formant moyen d'accrochage, un moyen de guidage coopérant étant ménagé sur ledit moyen de verrouillage dans le prolongement dudit moyen de fixation et ayant un profil en U adapté à chevaucher ladite patte.

Selon un autre aspect de la présente invention, un moyen de blocage intervient sur le trajet dudit moyen de verrouillage entre ladite position d'ouverture et ladite position de fermeture, ledit moyen de blocage coopérant avec un moyen élastiquement déformable de manière à ce que ledit moyen de verrouillage ne puisse passer ledit moyen de blocage que lorsqu'une certaine force est exercée sur lui.

Selon un autre aspect de la présente invention, une commande dudit moyen de verrouillage au moyen de laquelle un utilisateur peut commander la translation dudit moyen de verrouillage est ménagée sur la face arrière dudit boîtier.

Selon un autre aspect de la présente invention, ledit moyen de verrouillage est ménagé au niveau de l'extrémité inférieure dudit boîtier.

Avantageusement, lesdits moyens de guidage sont ménagés sur une coque arrière dudit boîtier.

Selon un autre aspect de la présente invention, des moyens d'accrochage respectifs adaptés à venir en prise les uns avec les autres sont ménagés sur l'une et l'autre desdites coques.

Avantageusement, lesdits moyens d'accrochage sont ménagés au niveau de l'extrémité supérieure dudit boîtier.

Selon un autre aspect de la présente invention, au moins l'une desdites coques est pourvue de moyens de maintien permettant de maintenir ladite platine intérieure immobile à l'intérieur desdites deux coques lorsque ces dernières sont assemblées.

Avantageusement, ladite platine intérieure est préalablement introduite dans une coque avant dudit boîtier, une surface avant de ladite platine venant s'étendre contre l'intérieur de la face avant de ladite coque avant, la coque arrière étant pourvue de moyens de maintien permettant de maintenir ladite platine contre ladite coque avant lorsque les deux coques sont assemblées.

Avantageusement, des moyens de confinement latéraux sont ménagés sur l'intérieur des flancs d'au moins l'une desdites coques pour immobiliser latéralement ladite platine intérieure.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en perspective de devant d'une coque arrière d'un boîtier selon la présente invention ;
la Fig. 2 est une vue en perspective de derrière d'une coque avant d'un boîtier selon la présente invention ;
la Fig. 3 est une vue en perspective de derrière d'une platine adaptée à être renfermée entre les coques des Figs. 1 et 2 ;
la Fig. 4 est une vue en perspective de derrière d'un organe de verrouillage adapté au verrouillage des coques des Figs. 1 et 2 ;
la Fig. 5 est une vue en perspective de devant de l'organe de verrouillage de la Fig. 4 ;
la Fig. 6 est une vue en coupe transversale de l'assemblage des coques des Figs. 1 et 2 et de la platine de la Fig. 3 au niveau de moyens de maintien de platine ;
la Fig. 7 est une vue en coupe transversale de l'assemblage des coques des Figs. 1 et 2 et de l'organe de verrouillage des Figs. 4 et 5 au niveau d'une partie inférieure de cet assemblage, permettant de voir des moyens de guidage de l'organe de verrouillage;
la Fig. 8 est une vue en coupe transversale de l'assemblage des coques des Figs. 1 et 2 et de l'organe de verrouillage des Figs 4 et 5 au niveau d'une partie inférieure de cet assemblage située plus bas que la partie montrée par la Fig. 7, permettant de voir des moyens de fixation de l'organe de verrouillage.

Un téléphone mobile selon la présente invention est du type à habillage amovible et comprend une platine intérieure 30 comprenant des composants du téléphone mobile et deux coques 10 et 20 adaptées à recevoir entre elles la platine intérieure 30. La fixation des composants du téléphone mobile sur la platine 30, bien connue en soi, ne sera pas décrite dans la présente description.

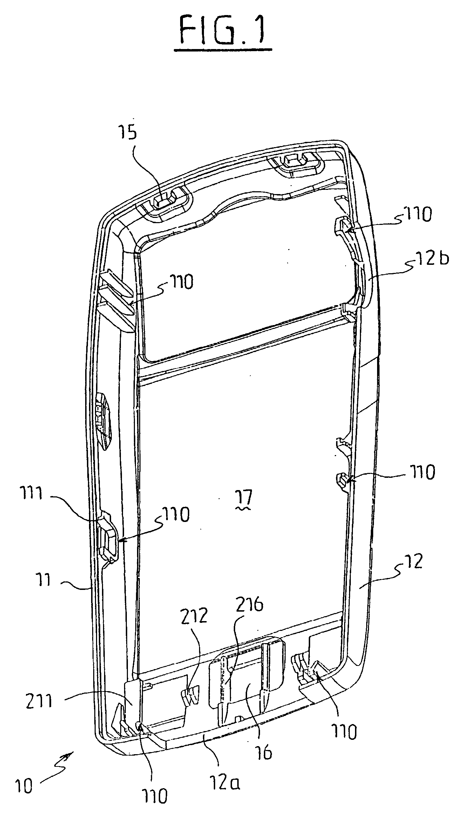

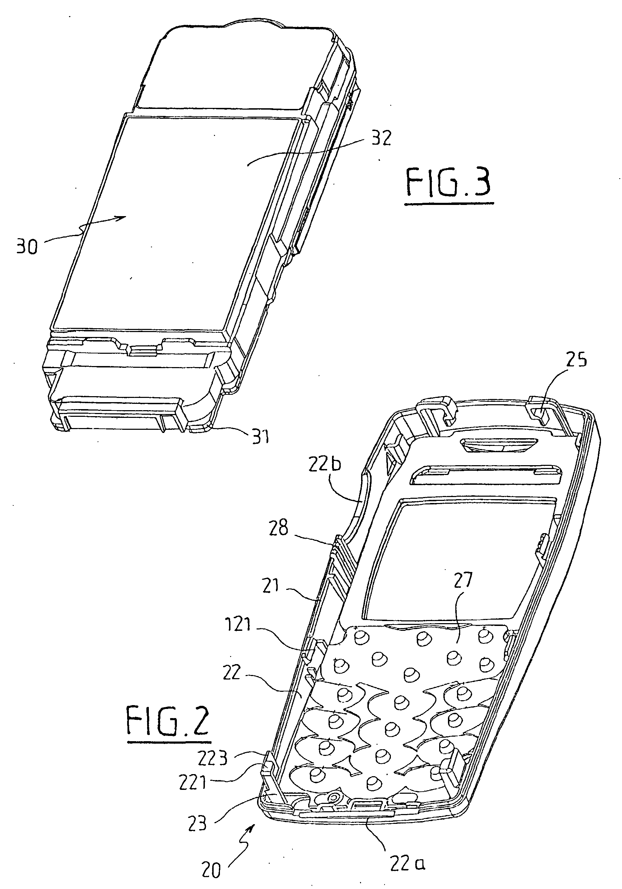

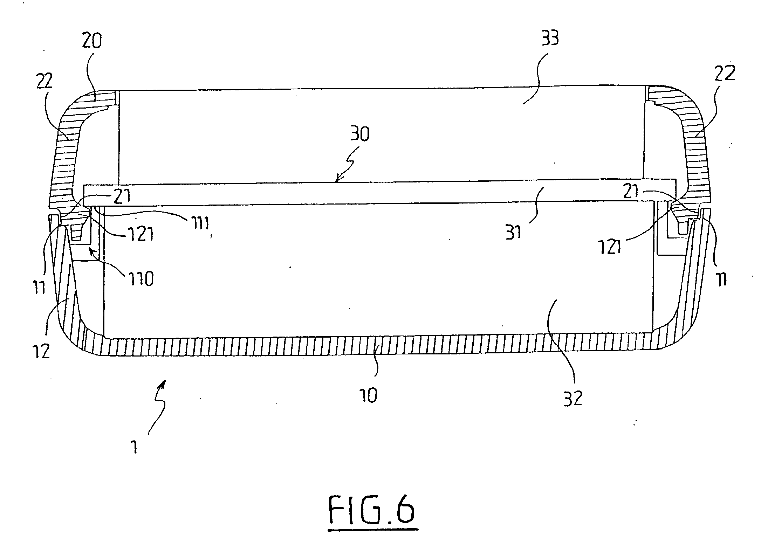

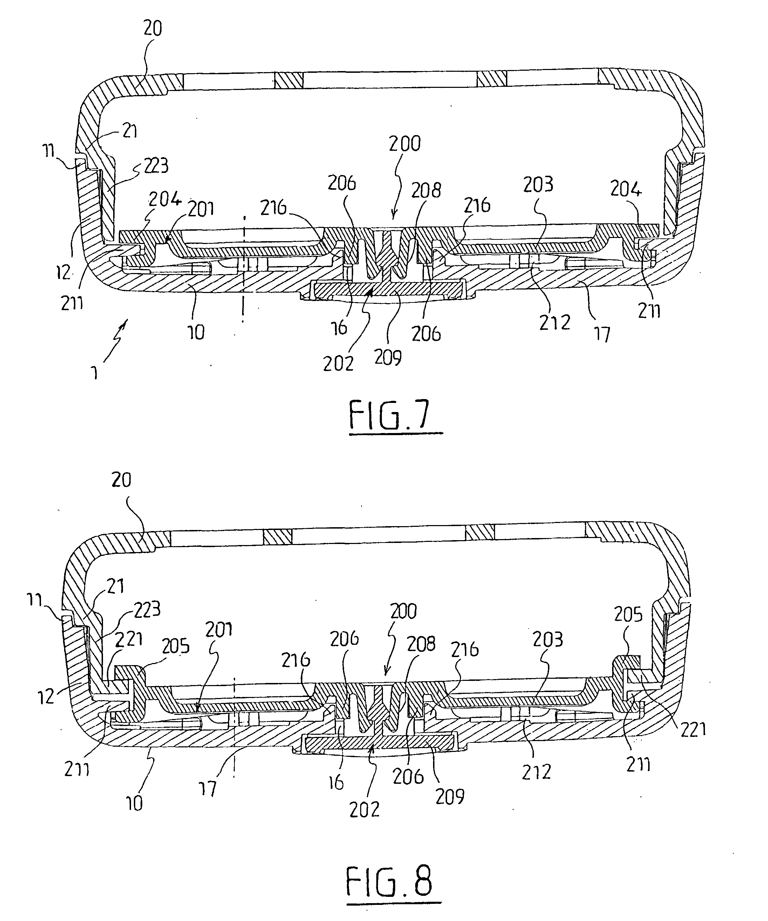

En référence à la Fig. 1, une coque arrière 10 comprend un fond 17, correspondant à la face arrière du téléphone, bordé par une cloison 12. Ainsi qu'il est bien connu, une lumière 12a est ménagée sur la partie inférieure de la cloison 12, correspondant à la face inférieure du téléphone, pour permettre le passage, par exemple, d'organes de branchement électrique. De même, une lumière 12b est ménagée sur une des parties latérales de la cloison 12, correspondant à une face latérale du téléphone, pour permettre le passage, par exemple, de boutons de commande. Sur tout le rebord libre de la cloison 12, destiné à venir en prise avec la coque avant, est ménagé un épaulement 11 en creux (visible également sur les Figs. 6, 7 et 8). Sur la partie supérieure de la cloison 12, correspondant à la face supérieure du téléphone, sont ménagés des plots 15, en saillie vers l'intérieur. Ces plots 15 servent de moyens d'accrochage coopérant avec des moyens d'accrochage 25 ménagés sur la coque avant 20, ainsi qu'il sera décrit en référence à la Fig. 2. Sur les parties latérales de la cloison 12, correspondant aux faces latérales du téléphone, et sur la partie arrière de la cloison 12, correspondant à la face inférieure du téléphone sont ménagées des structures en saillies 110. Ces structures 110 servent d'abord de moyens de maintien de la platine 30 dont la coque 10 va recouvrir la partie arrière. Des surfaces avant 111 de ces structures en saillies 110 dépassent par rapport au rebord libre de la cloison 12 de manière à porter contre la platine 30 ainsi qu'il sera décrit en référence à la Fig. 6. Ces structure en saillies 110, dépassant par rapport au rebord libre de la cloison 12, servent également de moyens d'achoppement permettant de centrer les deux coques 10 et 20 l'une par rapport à l'autre. Finalement, elles servent de moyens d'achoppement permettant d'assurer le placement correct de la platine 30 par rapport à la coque 10, l'avancée des saillies 110 vers l'intérieur de la coque 10 correspondant à des zones en creux ménagées sur cette platine 30. Sur les extrémités inférieures des parties latérales de la cloison 12, à proximité du fond 17, sont ménagées des pattes 211 s'étendant vers l'intérieur de la coque 10. Ainsi qu'il sera décrit en référence aux Figs. 7 et 8, ces pattes 211 servent de moyens de guidage pour un moyen de verrouillage 200 ainsi que de moyens d'accrochage coopérant avec des moyens 221 correspondant ménagés sur la coque avant 20 et un moyen de fixation 205 du moyen de verrouillage 200. Une cavité 16 est ménagée à travers le fond 17 pour permettre le passage d'un organe de commande 202 du moyen de verrouillage 200, ainsi qu'il sera décrit en référence aux Figs. 7 et 8. De part et d'autre de cette cavité 16, sont ménagées des pattes en saillies 216 formant moyens de guidage coopérant avec des moyens de guidage 206 ménagés sur le moyen de verrouillage 200, ainsi qu'il sera décrit en référence aux Figs. 7 et 8. De part et d'autre des saillies 216, sont ménagés des bossages 212 qui serviront de moyens de blocage en coopération avec des lames élastiques 203 ménagées sur le moyen de verrouillage 200, ainsi qu'il sera décrit en référence aux Figs. 7 et 8.

En référence à la Fig. 2, une coque avant 20 comprend un fond 27, correspondant à la face avant du téléphone, bordé par une cloison 22. Ainsi qu'il est bien connu, des lumières 22a et 22b sont respectivement ménagées sur la cloison 22 dans des zones correspondant au prolongement des zones dans lesquelles des lumières 12a et 12b sont ménagées sur la cloison 12 de la coque 10. En outre, des lumières sont ménagées sur le fond 27 dans des zones correspondant à différents composants du téléphone, ainsi qu'il est bien connu. Sur tout le rebord libre de la cloison 22, destiné à venir en prise avec la coque arrière 10, est ménagé un épaulement 21 en saillie, correspondant à l'épaulement 11 en creux ménagé sur la coque arrière 10, comme cela est également visible sur les Figs. 6, 7 et 8. Sur la partie supérieure de la cloison 22, correspondant à la face supérieure du téléphone, sont ménagés des logements 25, en creux. Ces logements 25 servent de moyens d'accrochage avec lesquels viennent en prise les plots 15 ménagés sur la coque arrière 10. Sur les parties latérales de la cloison 12, correspondant aux faces latérales du téléphone, sont ménagées des structures en saillies 121 et 28. Une paire de structures en saillies 121, disposées l'une en face de l'autre sur l'une et l'autre partie latérale de la cloison 22, intervenant à proximité du rebord libre de la cloison 22 et dépassant par rapport à ce dernier, servent de moyens de maintien de la platine dont la coque 20 va recouvrir la partie avant. Des parties de ces structures en saillies 121 sont adaptées à porter contre la platine 30 ainsi qu'il sera décrit en référence à la Fig. 6. Ces structures en saillies, dépassant par rapport au rebord libre de la cloison 22, servent également de moyens d'achoppement permettant de centrer les deux coques 10 et 20 l'une par rapport à l'autre. Une paire de structures en saillies 28, disposées l'une en face de l'autre sur l'une et l'autre partie latérale de la cloison 22, sont des butées en Z destinées à servir de moyens de confinement transversal de la platine 30 à l'intérieur de la coque 20, l'avancée des saillies 28 vers l'intérieur de la coque 10 étant déterminée en fonction de la largeur de la platine 30. Sur les extrémités inférieures des parties latérales de la cloison 12, sont ménagés des flasques 223, s'étendant globalement parallèlement respectivement aux parties de cloison 12 qu'elles prolongent et dépassant par rapport au rebord libre de la cloison 12. Chaque flasque 223 est renforcée par une flasque 23 s'étendant globalement parallèlement à la partie inférieure de la cloison 12 qu'elle prolonge et dépassant par rapport au rebord libre de la cloison 12 jusqu'au niveau des flasques 223. A l'extrémité des flasques 23 et 223 dont ménagées des pattes 221 s'étendant vers l'intérieur de la coque 10. Ces pattes 221 sont de plus petites tailles que les pattes 211 et elles s'étendent à un niveau correspondant à l'extrémité arrière des pattes 211. Ainsi qu'il sera décrit en référence aux Figs. 7 et 8, ces pattes 221 servent de moyens d'accrochage coopérant avec les pattes 211 et un moyen de fixation 205 du moyen de verrouillage 200.

En référence à la Fig. 3, une platine 30 comprend une plaque 31 comprenant la carte à circuits imprimés du téléphone (PCB) et son électronique (non représentée) protégée par un blindage formant couvercle rapporté sur la plaque. Dans le compartiment 33 (visible sur la Fig. 6) se trouvant à l'avant de la plaque 31, on trouve des composants tels que le clavier, l'écran et similaires. Dans le compartiment 32 se trouvant à l'arrière de la plaque 31, on trouve notamment des composants d'alimentation et en particulier la batterie du téléphone.

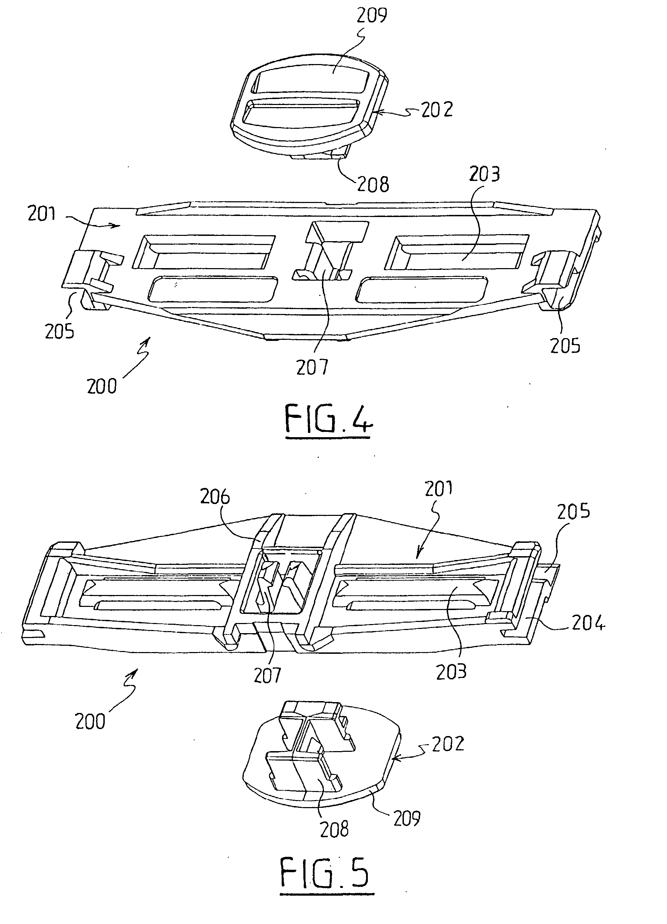

En référence aux Figs. 4 et 5, un verrou coulissant 200 comprend une plaque allongée 201 dont le centre sert notamment à accueillir un organe de commande 202 du verrou 200 et dont les ailes latérales portent à leurs extrémités un organe de guidage 204 prolongé par un organe de verrouillage 205.

Chacun des organes de guidage 204 est constitué par une séparation de l'aile latérale correspondante en deux branches formant un U définissant une rainure s'étendant dans une direction perpendiculaire à la grande longueur de la plaque 201, correspondant à une direction de translation du verrou 200 par rapport au téléphone. Au niveau d'une extrémité de cet organe de guidage 204, correspondant à une extrémité inférieure lorsque le verrou 200 coulissant fait partie de l'assemblage de boîtier, les deux branches du U s'écartent au niveau d'un épaulement à angle droit pour former une rainure de plus grande taille constituant l'organe de verrouillage 205.

Le centre de la plaque 201 comprend un percement adapté à recevoir le pied 208 d'un organe de commande 202. De part et d'autre de ce percement, des pattes de fixation par enclipsage 207 permettent la fixation de l'organe de commande 202 sur la plaque 201. De part et d'autre de ces pattes 207 sont ménagées des guides en saillies 206 s'étendant dans la direction de translation du verrou 200.

L'organe de commande 202 est constitué par une plaque 209 adaptée à coulisser contre la face arrière du téléphone et un pied 208 dont l'extrémité libre vient se fixer entre les pattes de fixation 207. Cet organe de commande fait saillie vers l'arrière du verrou 200.

Le long des ailes de la plaque 201, entre la partie centrale et les organes de guidage 204 et de fixation 205 s'étendent des lames élastiques 203 faisant saillies vers l'avant du verrou 200.

En référence à la Fig. 6, pour assembler un boîtier 1, la platine 30 est introduite dans la coque avant 20. L'écartement des saillies 121 étant inférieure à la largeur de la plaque 31, la platine doit être introduite à force dans la coque 20, ce qui provoque une déformation des cloisons latérales 22 du fait de l'effort exercé par la plaque 31 sur la partie arrondie des saillies 121. Une fois la plaque 31 en place sur la coque 20, les cloisons 22 se rabattent, assurant un maintien de la platine 30. La coque arrière 10 est ensuite disposée sur la coque avant 20, les plots 15 étant insérés dans les logements 25 et l'épaulement en saillie 21 venant dans l'épaulement en creux 11. Les surfaces supérieures 111 des saillies 110 viennent porter contre la plaque 31, ce qui contribue à assurer le maintien de la platine 30 à l'intérieur du boîtier.

En référence à la Fig. 7, le verrou 200 est installé sur la coque arrière 10, la plaque 201 se trouvant contre le fond 17 et occupant toute la largeur de la partie inférieure du boîtier 1, le pied 208 de l'organe de commande 202 passant à travers l'orifice 16, et la plaque 209 se trouvant contre la surface extérieure du boîtier 1. Les organes de guidage 204 sont en prise avec les pattes 211 correspondantes, de sorte que le verrou 200 coulisse dans le sens de la hauteur du boîtier 1. Les saillies 216 de la coque 10 s'étendent contre les saillies 206 du verrou 200, ce qui procure un second type de guides de coulissement. Le verrou 200 peut coulisser entre une position d'ouverture et une position de fermeture. Dans la position de fermeture, représentée sur la Fig. 8, l'organe de fixation 205 chevauche les pattes 211 et 221 qui, lorsque les coques avant 20 et arrière 10 sont assemblées, se trouvent l'une contre l'autre. Les pattes 211 et 221 étant maintenues l'une contre l'autre par l'organe de fixation 205 du verrou 200, les deux coques se trouvent verrouillées et ne peuvent se déplacer l'une par rapport à l'autre. Les pattes 221 étant plus courtes que les pattes 211, si le verrou 200, commandé par l'organe de commande 202 qu'un utilisateur manipule au moyen de la plaque 209, est déplacé vers le haut du boîtier 1, l'organe de fixation 205 n'est plus en prise avec la patte 221. Le verrou 200 se trouve alors en position d'ouverture. En revanche, quelle que soit la position du verrou 200, dont le débattement est limité par la hauteur de l'orifice 16, l'organe de guidage 204 reste en prise avec la patte 211. Les bossages 212 sont disposés sur le trajet du verrou 200. En position d'ouverture, les lames élastiques 203 du verrou 200 se trouvent en dessus des bossages 212. En position de fermeture, les lames élastiques 203 se trouvent en dessous des bossages 212. Donc, entre ces deux positions, les lames élastiques 203, dont une partie se trouve en regard des bossages 212, doivent se déformer afin de permettre le passage du verrou 200. Il faut donc pour passer de la position d'ouverture à la position de fermeture et réciproquement exercer une certaine force sur l'organe de commande 202, ce qui assure la sécurité du système.

## Revendications

1. Boîtier de téléphone mobile à habillage amovible comprenant une platine intérieure (30) comportant des composants du téléphone mobile et deux coques (10, 20) adaptées à recevoir entre elles ladite platine intérieure (30), des moyens d'assemblage permettant d'assembler de manière démontable lesdites deux coques (10 et 20), **caractérisé en ce que** lesdits moyens d'assemblage comprennent un moyen de verrouillage (200) qui est monté mobile en translation sur l'une desdites coques (10) entre une position d'ouverture et une position de fermeture et qui est pourvu d'un moyen de fixation (205) ayant un profil en U pour, d'une part, venir chevaucher deux pattes (211, 221) respectivement prévues sur l'une et l'autre desdites coques (10 et 20) et les serrer l'une contre l'autre lorsque ledit moyen de verrouillage (200) est dans sa position de fermeture et pour, d'autre part, les laisser libres l'une par rapport à l'autre lorsque ledit moyen de verrouillage (200) est dans sa position d'ouverture.

2. Boîtier selon la revendication 1, **caractérisé en ce que** des moyens de guidage (211, 216) ménagés sur au moins l'une des coques (10) permettent un guidage en translation dudit moyen de verrouillage (200) entre sa position d'ouverture et sa position de fermeture.

3. Boîtier selon la revendication 2, **caractérisé en ce qu'**un moyen de guidage est constitué par une desdites pattes (211) formant moyen d'accrochage, un moyen de guidage coopérant (204) étant ménagé sur ledit moyen de verrouillage (200) dans le prolongement dudit moyen de fixation (205) et ayant un profil en U adapté à chevaucher ladite patte.

4. Boîtier selon l'une quelconque des revendications précédentes, **caractérisé en ce qu'**un moyen de blocage (212) intervient sur le trajet dudit moyen de verrouillage (200) entre ladite position d'ouverture et ladite position de fermeture, ledit moyen de blocage coopérant avec un moyen élastiquement déformable (203) de manière à ce que ledit moyen de verrouillage ne puisse passer ledit moyen de blocage que lorsqu'une certaine force est exercée sur lui.

5. Boîtier selon l'une quelconque des revendications précédentes, **caractérisé en ce qu'**une commande (202) dudit moyen de verrouillage (200) au moyen de laquelle un utilisateur peut commander la translation dudit moyen de verrouillage est ménagée sur la face arrière dudit boîtier.

6. Boîtier selon l'une quelconque des revendications précédentes, **caractérisé en ce que** ledit moyen de verrouillage (200) est ménagé au niveau de l'extrémité inférieure dudit boîtier (1).

7. Boîtier selon l'une quelconque des revendications 2 à 6, **caractérisé en ce que** lesdits moyens de guidage (211, 216) sont ménagés sur une coque arrière (10) dudit boîtier (1).

8. Boîtier selon l'une quelconque des revendications précédentes, **caractérisé en ce que** des moyens d'accrochage (15, 25) respectifs adaptés à venir en prise les uns avec les autres sont ménagés sur l'une et l'autre desdites coques (10, 20).

9. Boîtier selon la revendication 8, **caractérisé en ce que** lesdits moyens d'accrochage (15, 25) sont ménagés au niveau de l'extrémité supérieure dudit boîtier (1).

10. Boîtier selon l'une quelconque des revendications précédentes, **caractérisé en ce que** au moins l'une desdites coques (20) est pourvue de moyens de maintien (121) permettant de maintenir ladite platine intérieure immobile à l'intérieur desdites deux coques lorsque ces dernières sont assemblées.

11. Boîtier selon l'une quelconque des revendications précédentes, **caractérisé en ce que** ladite platine intérieure (30) est préalablement introduite dans une coque avant (20) dudit boîtier, une surface avant de ladite platine venant s'étendre contre l'intérieur de la face avant de ladite coque avant, la coque arrière (10) étant pourvue de moyens de maintien (111) permettant de maintenir ladite platine contre ladite coque avant lorsque les deux coques sont assemblées.

12. Boîtier selon l'une quelconque des revendications précédentes, **caractérisé en ce que** des moyens de confinement latéraux (28) sont ménagés sur l'intérieur des flancs d'au moins l'une desdites coques pour immobiliser latéralement ladite platine intérieure.

## Patentansprüche

1. Mobiltelefongehäuse mit abnehmbaren Gehäuseschalen, umfassend eine innere Platine (30) mit Komponenten des Mobiltelefons und zwei Schalen (10, 20), die geeignet sind, diese innere Platine (30) zwischen sich aufzunehmen, wobei Verbindungsmittel es erlauben, diese zwei Schalen (10, 20) auf abnehmbare Weise zu verbinden, **dadurch gekennzeichnet, dass** diese Verbindungsmittel ein Verschlussmittel (200) umfassen, das an einer der Schalen (10) zwischen einer Öffnungsposition und einer Verschlussposition verschiebbar befestigt ist und das mit einem Befestigungsmittel (205) versehen ist, das ein U-förmiges Profil aufweist, um zum einen über zwei Laschen (211, 221) zu liegen, die jeweils auf der einen und der anderen der Schalen (10 und 20) vorgesehen sind, und sie gegeneinander zu drücken, wenn dieses Verschlussmittel (200) in seiner Verschlussposi tion ist, und um sie zum anderen relativ zueinander freizugeben, wenn das Verschlussmittel (200) in seiner Öffnungsposition ist.

2. Gehäuse nach Anspruch 1, **dadurch gekennzeichnet, dass** Führungsmittel (211, 216), die an mindestens einer der Schalen (10) vorgesehen sind, eine Führung der Verschiebung des Verschlussmittels (200) zwischen seiner Öffnungsposition und seiner Verschlussposition erlauben.

3. Gehäuse nach Anspruch 2, **dadurch gekennzeichnet, dass** ein Führungsmittel aus einer der Laschen (211) besteht, die ein Kupplungsmittel formt, wobei ein zusammenwirkendes Führungsmittel (204) an dem Verschlussmittel (200) in der Verlängerung des Befestigungsmittels (205) geformt ist und ein U-förmiges Profil aufweist, das dazu geeignet ist, über dieser Lasche zu liegen.

4. Gehäuse nach einem der vorangehenden Ansprüche, **dadurch gekennzeichnet, dass** ein Blockiermittel (212) zwischen der Öffnungsposition und der Verschlussposition auf dem Weg des Verschlussmittels (200) liegt, wobei dieses Blockiermittel mit einem elastisch verformbaren Mittel (203) so zusammenwirkt, dass das Verschlussmittel das Blockiermittel nur überschreiten kann, wenn eine bestimmte Kraft darauf ausgeübt wird.

5. Gehäuse nach einem der vorangehenden Ansprüche, **dadurch gekennzeichnet, dass** ein Bedienteil (202) dieses Verschlussmittels (200), mit dessen Hilfe ein Benutzer die Verschiebung des Verschlussmittels steuern kann, auf der Rückseite des Gehäuses vorgesehen ist.

6. Gehäuse nach einem der vorangehenden Ansprüche, **dadurch gekennzeichnet, dass** das Verschlussmittel (200) auf der Höhe des unteren Endes des Gehäuses (1) vorgesehen ist.

7. Gehäuse nach einem der Ansprüche 2 bis 6, **dadurch gekennzeichnet, dass** die Führungsmittel (211, 216) an einer hinteren Schale (10) des Gehäuses (1) vorgesehen sind.

8. Gehäuse nach einem der vorangehenden Ansprüche, **dadurch gekennzeichnet, dass** jeweilige Kupplungsmittel (15, 25), die geeignet sind, miteinander in Eingriff zu kommen, an der einen und der anderen der Schalen (10, 20) vorgesehen sind.

9. Gehäuse nach Anspruch 8, **dadurch gekennzeichnet, dass** die Kupplungsmittel (15, 25) auf der Höhe des oberen Endes des Gehäuses (1) vorgesehen sind.

10. Gehäuse nach einem der vorangehenden Ansprüche, **dadurch gekennzeichnet, dass** mindestens eine der Schalen (20) mit Haltemitteln (121) versehen ist, die es erlauben, die innere Platine innerhalb der zwei Schalen festzustellen, wenn diese verbunden sind.

11. Gehäuse nach einem der vorangehenden Ansprüche, **dadurch gekennzeichnet, dass** die innere Platine (30) vorher in eine vordere Schale (20) des Gehäuses eingeführt wird, wobei eine Vorderseite der Platine gegen das Innere der Vorderseite der vorderen Schale zum Anliegen kommt, wobei die hintere Schale (10) mit Haltemitteln (111) versehen ist, die es erlauben, die Platine gegen die vordere Schale zu halten, wenn die zwei Schalen verbunden sind.

12. Gehäuse nach einem der vorangehenden Ansprüche, **dadurch gekennzeichnet, dass** seitliche Begrenzungs- bzw. Einschließungsmittel (28) auf der Innenseite der Seitenwände mindestens einer der Schalen vorgesehen sind, um die innere Platine seitlich festzustellen.

## Claims

1. Mobile telephone housing with a detachable casing comprising an internal board (30) accommodating components of the mobile telephone and two shells (10, 20) adapted to receive said internal board (30) between them, means of assembly permitting detachable assembly of said two shells (10 and 20), **characterised in that** said means of assembly comprise a locking means (200) which is mounted so that it can move in translation on one of said shells (10) between an open position and a closed position and which is provided with a fixing means (205) having a U-shaped profile in order firstly to straddle two lugs (211, 221) provided respectively on the one and the other of said shells (10 and 20) and clamp them one against the other when said locking means (200) is in its closed position, and in order secondly to leave them free one in relation to the other when said locking means (200) is in its open position.

2. Housing according to claim 1, **characterised in that** guide means (211, 216) formed on at least one of the shells (10) permit guidance in translation of said locking means (200) between its open position and its closed position.

3. Housing according to claim 2, **characterised in that** a guide means is constituted by one of said lugs (211) forming a means of attachment, a co-operating guide means (204) being formed on said locking means (200) in the extension of said fixing means (205) and having a U-shaped profile adapted to straddle said lug.

4. Housing according to any one of the preceding claims, **characterised in that** a blocking means (212) intervenes on the path of said locking means (200) between said open position and said closed position, said blocking means co-operating with an elastically deformable means (203) so that said locking means can only pass said blocking means when a certain force is applied on it.

5. Housing according to any one of the preceding claims, **characterised in that** a control (202) for said locking means (200) by means of which a user can control the translation of said locking means is formed on the rear face of said housing.

6. Housing according to any one of the preceding claims, **characterised in that** said locking means (200) is formed level with the lower end of said housing (1).

7. Housing according to any one of claims 2 to 6, **characterised in that** said guide means (211, 216) are formed on a rear shell (10) of said housing (1).

8. Housing according to any one of the preceding claims, **characterised in that** respective means of attachment (15, 25) adapted to engage one with the other are formed on the one and the other of said shells (10, 20).

9. Housing according to claim 8, **characterised in that** said means of attachment (15, 25) are formed level with the upper end of said housing (1).

10. Housing according to any one of the preceding claims, **characterised in that** at least one of said shells (20) is provided with holding means (121) making it possible to hold said internal board immobile inside said two shells when the latter are assembled.

11. Housing according to any one of the preceding claims, **characterised in that** said internal board (30) is firstly introduced into a front shell (20) of said housing, a front surface of said board extending against the interior of the front face of said front shell, the rear shell (10) being provided with holding means (111) making it possible to hold said board against said front shell when the two shells are assembled.

12. Housing according to any one of the preceding claims, **characterised in that** lateral confinement means (28) are formed on the interior of the flanks of at least one of said shells in order to immobilise said internal board laterally.
